# EUROPÄISCHE PATENTANMELDUNG

(11) **EP 1 024 390 A1**
(43) Veröffentlichungstag der Anmeldung: **02.08.2000**
(21) Anmeldenummer: 99115381.8
(22) Anmeldetag: 04.08.1999
(51) Int. Cl.: G02C 1/02

(54) **Bohrbrillenfassung**

(30) Priorität: 27.01.1999 DE 29901347 U
(71) Anmelder: Dr. Eugen Beck GmbH & Co., 59302 Oelde (DE)
(72) Erfinder: Beck, Rainer Dipl.-Ing, 59302 Oelde (DE); Ribbert, Götz, 59302 Oelde (DE)
(74) Vertreter: Patentanwälte Meinke, Dabringhaus und Partner

(57) **Zusammenfassung**

Bei einer Bohrbrillenfassung mit einer die beiden Gläser verbindenden Brücke und mit brillenaußenseitigen, die Bügel tragenden Backen oder einem die Gläser tragenden Oberbalken mit daran direkt angeordneten Bügeln mit je einem, eine Bohrung im Bereich des Glases durchsetzenden, stiftförmigen Befestigungselement an dem jeweils freien Befestigungsende der Backen und der Brücke soll eine möglichst filigrane, leicht wirkende Verbindung von Brillengläsern, Brücke und Backen bzw. Oberbalken möglich und eine höchtsmögliche Stabilität und Verdrehsicherheit erzielbar sein.

Dies wird dadurch erreicht, daß die stiftförmigen Befestigungselemente (10) jeweils wenigstens einen seitlichen, flügelförmigen, verbreiterten Ansatzbereich (11) aufweisen, und daß die Brillengläser (2) hierzu korrespondierende, sich angrenzend zur jeweiligen Bohrung (5,6) erstreckende, manuell und/oder maschinell herstellbare schlitzartige (sickenförmige) Einkerbungen (13,14) abseits des unmittelbaren Glasrandes zum spannungsfreien, verdrehsicheren und formschlüssigen Eingriff der verbreiterten Ansatzbereiche (11) aufweisen.

## Beschreibung

Die Erfindung betrifft eine Bohrbrillenfassung mit einer die beiden Gläser mittig verbindenden Brücke und mit brillenaußenseitigen, die Bügel tragenden Backen oder einem die Gläser tragenden Oberbalken mit daran direkt angeordneten Bügeln sowie ein Verfahren zu deren Herstellung.

Bei sogenannten Nur-Glas-Brillen ist es bekannt, statt eines Brillenrahmens oder Brillengestelles die Brücke zur Verbindung der beiden Brillengläser und die Backen zur Befestigung der Brillenbügel unmittelbar an den Brillengläsern anzuordnen. Ebenso gibt es sogenannte Oberbalkenbrillen mit daran direkt angeordneten Bügeln, an denen die Gläser "hängend" angeordnet sind.

In beiden Fällen werden die Brillengläser mit entsprechenden Bohrungen versehen, so daß auch von Bohrbrillenfassungen gesprochen wird.

Um eine ausreichende Fixierung der Backen, die über die Brillenbügel relativ große Kräfte aufnehmen müssen, wie auch der Brücke zu erreichen, werden die Backen und die Brücken in der Regel mit wenigstens je zwei die Brillengläser durchsetzenden, beispielsweise als Schraube ausgebildeten stiftförmigen Befestigungselementen befestigt, was dazu führt, daß jedes Brillenglas mit wenigstens vier Bohrungen, nämlich einerseits zwei für die jeweilige Backe, und andererseits jeweils zwei für den Bügel, versehen werden müssen. Bei Oberbalkenbrillen erfolgt ebenfalls eine Befestigung mit mindestens zwei Schrauben pro Glas.

Mit dem Bohren von jeweils zwei Löchern ist ein doppelter Arbeitsaufwand verbunden, mit der doppelt so großen Gefahr, daß das zu bearbeitende Brillenglas hierbei beschädigt und ggf. ersetzt werden muß. Werden die Backen und der Bügel nur aus Draht gefertigt, brechen die daran angelöteten stiftförmigen Befestigungselemente darüber hinaus leicht ab, weil nur eine Punktlötung möglich ist, was insbesondere bei der Verbindung schwierig zu verlötender Materialien, wie z.B. Edelstahl oder Titan, nachteilig ist.

Darüber hinaus ist auch bereits eine Lösung mit jeweils nur einer Bohrung zur Anbringung jeder Backe oder einer Seite der Brücke bekannt geworden, bei der die Beschlagteile sich durch das Festdrehen der Mutter auf einer durch eine am jeweiligen freien Ende der Backen und der Brücke angeordneten Öse hindurchtretenden Schraube von selbst im Glas fixieren. Die Befestigung, insbesondere mittels relativ großflächiger Ösen zur Aufnahme der Schrauben, wirkt jedoch plump und ästhetisch wenig ansprechend, zudem ist die notwendige Verdrehsicherheit der Befestigung nicht ausreichend gegeben.

Aus der WO 97/21133 ist eine Lösung bekannt, bei der brillenglasrandseitig jeweils eine dem Brillenbügel bzw. der Backe entsprechende Einfräsung vorgesehen ist, in die die Backe bzw. der Bügel formschlüssig eingreifen. Nachteilig an dieser Lösung ist jedoch, daß der Glasrand mechanisch stark beansprucht und geschwächt wird mit der sehr großen Gefahr, daß insbesondere die im außenrandseitigen Bereich des eingefrästen Glases gelegenen Ecken aus- bzw. abbrechen. Die Einfräsungen können überdies nur mit einer speziellen Vorrichtung, speziell einer Fräsmaschine, vorgenommen werden.

Aus der US 2,588,505 ist darüber hinaus eine Lösung bekannt, bei der die Gläser in unmittelbarer Nähe des Brillenrandes beidseitig schlitzförmige Einfräsungen aufweisen, in die miteinander zu verspannende Klemmbacken von beiden Seiten eingreifen.

Aus der weiteren US 5,659,380 ist eine Lösung bekannt, bei der eine Befestigung mittels einer durchgängigen Vierkantbohrung bzw. Vierkantschraube und einer elastisch gepolsterten Rundbohrung durch ein formschlüssiges Durchgangsloch gebildet wird, die Verdrehsicherung und das Loch im Glas fallen zusammen.

Schließlich sieht die US 5,684,559 eine schlitzförmige Durchtrittsöffnung vor, in die die Backen bzw. der Bügel, deren Enden zu einer Feder gebogen sind, unter Spannung eingedrückt werden. Der Schlitz liegt offen, eine Verschraubung findet nicht statt. Das Glas steht unter Spannung und wird durch das insgesamt schlitzförmige Durchgangsloch relativ stark geschwächt.

Alle bekannten Lösungen sind somit mit Nachteilen behaftet.

Aufgabe der Erfindung ist es daher, eine Lösung zu schaffen, mit der einerseits eine möglichst filigrane, leicht wirkende und unauffällige Verbindung von Brillengläsern, Brücke und Backen bzw. Oberbalken möglich ist, bei der auf der anderen Seite jedoch auch eine höchstmögliche Stabilität und Verdrehsicherheit erzielt wird, wobei auch eine bessere Verlötung des Befestigungselementes mit dem Brillendraht von Bedeutung ist.

Diese Aufgabe wird gemäß der Erfindung mit einer Brillenfassung der eingangs bezeichneten Art dadurch gelöst, daß die stiftförmigen Befestigungselemente jeweils wenigstens einen seitlichen, flügelförmigen, verbreiterten Ansatzbereich aufweisen, und daß die Brillengläser hierzu korrespondierende, sich angrenzend zur jeweiligen Bohrung erstreckende, manuell und/oder maschinell herstellbare, schlitzartige (sickenförmige) Einkerbungen abseits des unmittelbaren Glasrandes zum spannungsfreien, verdrehsicheren und formschlüssigen Eingriff der verbreiterten Ansatzbereiche aufweisen.

Durch den verbreiterten Ansatzbereich der jeweiligen Schraube an der Brücke und/oder Backe bzw. am Oberbalken ist eine stabile, dauerhafte, abknicksichere Verlötung auch bei schwierig miteinander zu verbindenden Materialien, wie insbesondere Edelstahl oder Titan, gewährleistet. Durch den erzielten Formschluß zwischen den schlitzartigen, sickenförmigen Einkerbungen in den Gläsern einerseits und den hierin eingreifenden, seitlichen, flügelförmigen, verbreiterten Ansatzbereichen der Befestigungselemente andererseits erfolgt eine sichere Verdrehsicherung über den dabei erzielten Formschluß. Formschluß und Schraubenbohrung überdecken einander, so daß ein einwandfreies optisches Ergebnis erzielt wird. Die Gläser werden nur schlitzförmig eingefräst und müssen nicht durchgängig schlitzförmig durchbohrt werden, werden somit mechanisch weniger stark belastet. Die Verdrehsicherung und das Befestigungsloch werden miteinander vereinigt.

Die Erfindung sieht weiter vor, daß das stiftförmige Befestigungselement sowie der Ansatzbereich in die jeweilige Bohrung und/oder in die jeweiligen Einkerbungen eingeklebt sind. Damit kann auf jedwede Schraubverbindung oder dergleichen verzichtet werden, gleichwohl bleibt die Verdrehsicherung über den Formenschluß erhalten.

In Ausgestaltung ist vorgesehen, daß an dem Ansatz zwei zueinander symmetrische Ansatzbereiche vorhanden sind, was den Formschluß und die Verdrehsicherung noch weiter verbessert.

Beim Einsetzen der Gläser greift der Ansatzbereich in hierzu korrespondierende, außenseitige, schlitzartige Einkerbungen der Brillengläser ein, die sich beidseitig der jeweiligen Bohrung, durch die das Befestigungselement hindurchtritt, erstrecken. Beim Festziehen der Schraube mittels einer von der gegenüberliegenden Seite aufgeschraubten Mutter oder beim Verkleben legen sich die Ansatzbereiche formschlüssig in die Einkerbungen ein, wodurch die notwendige Verdrehsicherheit geschaffen wird.

In Ausgestaltung ist vorgesehen, daß der Ansatzbereich mit dem jeweiligen Brücken- und/oder Backenbereich bzw. Oberbalkenbereich fluchtet. Dadurch, daß der verbreiterte Ansatzbereich mit dem jeweiligen Brücken- und/oder Backenbereich fluchtet, tritt er optisch überhaupt nicht in Erscheinung, er verschwindet optisch vollständig hinter der Brücke bzw. den freien Enden der seitlichen Backen bzw. hinter dem Oberbalken.

Die Verdrehsicherungskerbe kann nach dem Bohren der jeweiligen Durchtrittsöffnung in dem Brillenglas gleichermaßen durch eine spezielle Fräse, die in Form einer miniaturisierten Trennscheibe ausgebildet ist, wie auch durch eine Stirnfräsung hergestellt werden. Vorteilhaft sieht die Erfindung vor, daß die Einkerbungen und die hierin eingreifenden Ansätze entweder eine halbkreisförmige Anlagekontur aufweisen oder daß die Einkerbungen schlitzförmig in Form eines nicht durchgebohrten Langlochs (Sackbohrung) und die hierin eingreifenden Ansatzbereiche stegförmig ausgebildet sind.

Besonders vorteilhaft kommt die vorliegende Erfindung zum Einsatz, wenn die Brücke und die Backen bzw. der Oberbalken aus Draht, insbesondere aus Edelstahl oder Titan, gebildet sind, was die Erfindung ebenfalls vorsieht.

Ferner sieht die Erfindung auch noch vor, daß das stiftförmige Befestigungselement einteilig an der Brücke und/oder Backe bzw. an den Oberbalken angeformt ist.

Außerdem sieht die Erfindung auch noch vor, daß die Bohrungen als Sackbohrungen ausgebildet sind, deren Tiefe der Tiefe der Einkerbungen entspricht. In diesem Ausführungsbeispiel wird das Glas nicht mehr von einem stiftförmigen Befestigungselement insgesamt durchsetzt, vielmehr greift dieses zusammen mit den Ansatzbereichen nur noch in die Sackbohrung und die Einkerbungen ein und wird mit diesen verdrehsicher verklebt.

Die Erfindung sieht auch ein Verfahren zur Herstellung einer erfindungsgemäßen Bohrbrillenfassung vor, bei dem die Brillengläser mit wenigstens einer Bohrung für ein stiftförmiges Befestigungselement versehen werden, in welche anschließend ein stiftförmiges Befestigungselement die Bohrung wenigstens teilweise durchsetzend eingesetzt und befestigt wird, wobei sich das Verfahren dadurch auszeichnet, daß die Brillengläser mittels einer Fräse oder dergleichen von Hand oder maschinell mit wenigstens einer schlitzartigen Einkerbung angrenzend an die jeweilige Bohrung versehen werden, in welche jeweils anschließend das betreffende stiftförmige Befestigungselement mit seinem seitlichen, flügelförmigen, verbreiterten Ansatzbereich eingesetzt wird.

Dabei können die Brillengläser mit einer Bohrung für ein stiftförmiges Befestigungselement und mittels einer Fräse in Form einer miniaturisierten Trennscheibe von Hand oder mittels einer Fräsmaschine mit einer schlitzartigen Einkerbung beidseits der Durchtrittsöffnung versehen werden.

Darüber hinaus sieht die Erfindung auch vor, daß die Brillengläser mit einer Bohrung für ein stiftförmiges Befestigungselement und mittels eines Stirnfräsers durch Hin- und Herbewegung von Hand oder mittels einer Fräsmaschine mit einer als Langloch ausgebildeten Sackbohrung versehen werden.

Beide Verfahrensweisen bieten den Vorteil, daß die notwendigen Einkerbungen bzw. die Sackbohrung sowohl herstellerseitig mittels einer Fräsmaschine wie auch manuell durch den jeweiligen Optiker vor Ort hergestellt werden können, was insbesondere bei speziellen Anpassungen von Vorteil ist. Dabei können herkömmliche, miniaturisierte Trennscheiben oder Stirnfräser zum Einsatz kommen, es bedarf keiner Anschaffung spezieller Werkzeuge.

Die Erfindung ist nachstehend anhand der Zeichnung beispielsweise näher erläutert. Diese zeigt in
- Fig. 1: in perspektivischer Darstellung eine erfindungsgemäße, nur zur Hälfte dargestellte Brille,
- Fig. 2: die Brille nach Fig. 1 in Explosionsdarstellung,
- Fig. 3: den verbreiterten Ansatzbereich der Schraube,
- Fig. 4: ein Brillenglas mit sich beidseits der Bohrung erstreckenden, schlitzartigen Einkerbungen.

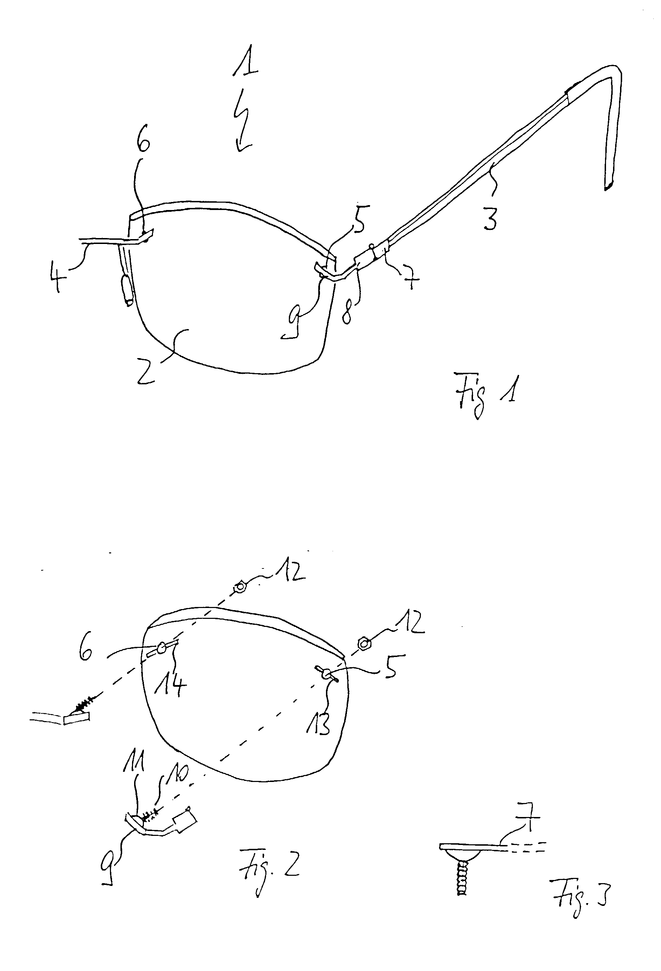

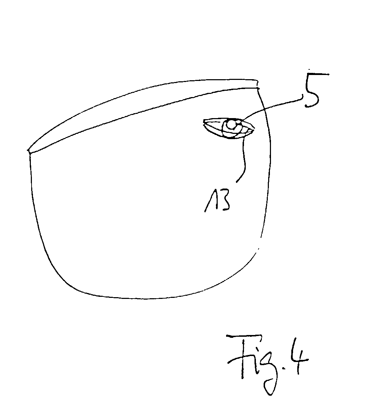

Eine erfindungsgemäße Brille 1 ist in der Zeichnung nur zur Hälfte dargestellt, nämlich mit nur einem Brillenglas 2 und einem Brillenbügel 3 sowie mit einer nur unvollständig dargestellten Brücke 4. Die Brille 1 ist vollständig zur vertikalen Mittelachse der Brücke 4 symmetrisch ausgebildet, d.h. entsprechend mit zwei Gläsern 2 und zwei Brillenbügeln 3.

Das Brillenglas 2 ist in seinem Außenrandbereich mit einer Bohrung 5 versehen und an der gegenüberliegenden Seite mit einer weiteren Bohrung 6, die jeweils zur Befestigung des Brillenglases 2 am Brillenbügel 3 bzw. an der Brücke 4 dienen.

Der Brillenbügel 3 weist ein um eine vertikale Achse schwenkbares Drehgelenk 7 auf, an dem eine Backe 8 mit einem freien Ende 9 angelenkt ist. An dem freien Backenende 9 ist ein Bolzen, Stift bzw. Schraubenschaft 10 angelenkt, an dessen Ansatz sich seitliche, mit dem freien Backenbereich 9 fluchtende, flügelförmige, verbreiterte Ansatzbereiche 11 befinden. Diese Ansatzbereiche 11 sind insgesamt etwa halbkreisförmig ausgebildet und beschreiben einen Radius von etwa 180°. Im Mittelbereich in einem rechten Winkel zum freien Ende 9 der Backe 8 ist ein Bolzen, Stift, Schraubenschaft 10 od. dgl. angelötet. Dieser läßt sich durch die Bohrung 5 des Glases 2 hindurchstecken und von der Rückseite mit einer Schraubenmutter 12 festschrauben.

Das Brillenglas 2 weist neben den Bohrungen 5 und 6 sich beidseits der beiden Bohrungen 5 und 6 erstreckende, schlitzartige Einkerbungen 13, 14 auf, die beispielsweise linsenförmig oder auch schlitzförmig ausgebildet sind und zur formschlüssigen Aufnahme der verbreiterten, flügelförmigen Ansatzbereiche 11 am freien Ende 9 der Backe 8 geeignet sind. Beim Einsetzen der Schraube 10 in eine der Durchtrittsöffnungen 5, 6 des Brillenglases 2 legen sich die mit den Brücken- und/oder Backenbereich 4, 8 fluchtenden, flügelförmigen, verbreiterten Ansatzbereiche 11 eng in die linsenförmigen, schlitzartigen Einkerbungen 13, 14 hinein, derart, daß die Schraube 10 und damit die gesamte Backe 8 bzw. Brücke 4 gegen Verdrehung gesichert sind und problemlos von der anderen Seite des Brillenglases 2 die Befestigungsmuttern 12 aufgeschraubt werden können. Die gesamte Brille 1 erhält hierdurch, da korrespondierende Einkerbungen 13, 14 und Ansatzbereiche 11 auch auf der zum dargestellten Teil der Brille 1 symmetrischen, anderen Brillenhälfte vorgesehen sind, eine festgefügte, nicht verschieb- und/oder verdrehbare Struktur, die eine sichere Handhabung und ein problemloses Tragen der Brille 1 durch den Benutzer sicherstellt.

Bevorzugt weisen die Einkerbungen 13, 14 und die hierin eingreifenden Ansatzbereiche 11 eine im wesentlichen halbkreisförmige Anlagekontur auf und die Brücke 4 und die Backen 8 sind aus einem Draht, insbesondere aus Edelstahl oder Titan, gebildet. In diesem Fall erleichtert der verbreiterte Ansatzbereich 11 das Anlöten des Bolzens 10 an der Brücke 4 bzw. der Backe 5, da nicht nur eine punktuelle Anlagefläche, wie bei einem runden Draht, sondern eine großflächige Anlagefläche am Brillendraht zur Verfügung steht.

Natürlich ist die Erfindung nicht auf das dargestellte Ausführungsbeispiel beschränkt. Weitere Ausgestaltungen der Erfindung sind möglich, ohne den Grundgedanken zu verlassen. So ist es selbstverständlich auch möglich, mehr als eine Schraube 10 und mehr als je eine Durchtrittsöffnung 5,6 vorzusehen, und zwar vorzugsweise nebeneinander, mit dem jeweiligen Backen- bzw. Brückenbereich 4, 8 fluchtend, so daß die Schrauben 10 und Bohrungen 5, 6 von diesem abgedeckt werden. Wesentlich ist nur, daß eine Verdrehsicherheit hergestellt wird, ohne daß die hierzu notwendigen Mittel optisch störend auf der Vorderseite der Brille 1 hervortreten. Auch ist es möglich, das jeweilige freie Ende der Backe 8 und/oder der Brücke 4 um 90° abzuwinkeln und in ein stiftförmiges Befestigungselement 10 zum Durchtritt durch die Bohrungen 5, 6 übergehen zu lassen und im Bereich des so gebildeten rechten Winkels nur einseitig eine Verbreiterung 11 anzuordnen, die in eine entsprechende Teileinkerbung 13, 14 im Brillenglas 2 verdrehsicher eingreift, während die Schraube 10 mittels einer Mutter 12 am Brillenglas 2 festgezogen wird. Weiterhin ist es möglich, das Befestigungselement 10 und die Ansatzbereiche 11 mit dem Glas 2 im Bereich der Bohrungen 4, 5 und der Einkerbungen 13, 14 zu verkleben, und zwar unabhängig davon, ob die Bohrungen 13, 14 das Glas 2 durchdringen oder als Sackbohrungen ausgestaltet sind, und ob die Ansatzbereiche 11 mit der Brücke 4 und/oder den Backen 8 fluchten oder nicht fluchten. In jedem Fall wird die notwendige Verdrehsicherheit erreicht.

## Patentansprüche

1. Bohrbrillenfassung mit einer die beiden Gläser verbindenden Brücke und mit brillenaußenseitigen, die Bügel tragenden Backen oder einem die Gläser tragenden Oberbalken mit daran direkt angeordneten Bügeln mit je einem, eine Bohrung im Bereich des Glases wenigstens teilweise durchsetzenden, beispielsweise als Schraube ausgebildeten, stiftförmigen Befestigungselement an dem jeweils freien Befestigungsende der Backen und der Brücke oder im rechten und linken Mittelbereich des Oberbalkens,
dadurch gekennzeichnet,
daß die stiftförmigen Befestigungselemente (10) jeweils wenigstens einen seitlichen, flügelförmigen, verbreiterten Ansatzbereich (11) aufweisen, und daß die Brillengläser (2) hierzu korrespondierende, sich angrenzend zur jeweiligen Bohrung (5,6) erstreckende, manuell und/oder maschinell herstellbare schlitzartige (sickenförmige) Einkerbungen (13,14) abseits des unmittelbaren Glasrandes zum spannungsfreien, verdrehsicheren und formschlüssigen Eingriff der verbreiterten Ansatzbereiche (11) aufweisen.

2. Bohrbrillenfassung nach Anspruch 1,
dadurch gekennzeichnet,
daß das stiftförmige Befestigungselement (10) sowie der Ansatzbereich (11) in die jeweilige Bohrung (5,6) und/oder in die jeweiligen Einkerbungen (13,14) eingeklebt sind.

3. Bohrbrillenfassung nach Anspruch 1 oder 2,
dadurch gekennzeichnet,
daß an dem Ansatz zwei zueinander symmetrische Ansatzbereiche (11) vorhanden sind.

4. Bohrbrillenfassung nach Anspruch 1, 2 oder 3,
dadurch gekennzeichnet,
daß der Ansatzbereich (11) mit dem jeweiligen Brücken- (4) und/oder Backenbereich (8) fluchtet.

5. Bohrbrillenfassung nach Anspruch 1 oder einem der folgenden Ansprüche,
dadurch gekennzeichnet,
daß die Einkerbungen (13,14) und die hierin eingreifenden Ansatzbereiche (11) eine aufsichtlich im wesentlichen halbkreisförmige Anlagekontur aufweisen.

6. Bohrbrillenfassung nach Anspruch 1 oder einem der folgenden Ansprüche,
dadurch gekennzeichnet,
daß die Einkerbungen (13,14) schlitzförmig in Form eines nicht durchgebohrten Langlochs und die hierin eingreifenden Ansatzbereiche (11) stegförmig ausgebildet sind.

7. Bohrbrillenfassung nach Anspruch 1 oder einem der folgenden Ansprüche,
dadurch gekennzeichnet,
daß die Brücke (4) und die Backen (8) aus einem Draht gebildet sind, insbesondere aus Edelstahl oder Titan.

8. Bohrbrillenfassung nach Anspruch 1 oder einem der folgenden Ansprüche,
dadurch gekennzeichnet,
daß das stiftförmige Befestigungselement (10) einteilig an der Brücke (4) bzw. Backe (8) angeformt ist.

9. Bohrbrillenfassung nach Anspruch 1 oder 2,
dadurch gekennzeichnet,
daß die Bohrungen (5,6) als Sackbohrungen ausgebildet sind, deren Tiefe der Tiefe der Einkerbungen (13,14) entspricht.

10. Verfahren zur Herstellung einer Bohrbrillenfassung nach Anspruch 1 und/oder wenigstens einem der folgenden, bei dem die Brillengläser mit wenigstens einer Bohrung für ein stiftförmiges Befestigungselement versehen werden, in welche anschließend ein stiftförmiges Befestigungselement die Bohrung wenigstens teilweise durchsetzend eingesetzt und befestigt wird,
dadurch gekennzeichnet,
daß die Brillengläser (2) mittels einer Fräse oder dergleichen von Hand oder maschinell mit wenigstens einer schlitzartigen Einkerbung (13,14) angrenzend an die jeweilige Bohrung (5,6) versehen werden, in welche jeweils anschließend das betreffende stiftförmige Befestigungselement (10) mit seinem seitlichen, flügelförmigen, verbreiterten Ansatzbereich (11) eingesetzt wird.
